Europäisches Patentamt

European Patent Office

Office européen des brevets

(11) Numéro de publication: **0 133 087**
A1

## (12) DEMANDE DE BREVET EUROPEEN

(21) Numéro de dépôt: 84401433.2

(22) Date de dépôt: 05.07.84

(51) Int. Cl.⁴: **F 16 B 37/06**

(30) Priorité: 22.07.83 FR 8312195

(43) Date de publication de la demande:
13.02.85 Bulletin 85/7

(84) Etats contractants désignés:
AT BE CH DE GB IT LI LU NL SE

(71) Demandeur: RAPID S.A.
251 Boulevard Péreire
F-75852 Paris Cedex 17(FR)

(72) Inventeur: Dubost, Dominique Michel Louis
53 Résidence Elysées II
F-78170 La Celle Saint Cloud(FR)

(74) Mandataire: Durand, Yves Armand Louis et al,
Cabinet Z. Weinstein 20, Avenue de Friedland
F-75008 Paris(FR)

(54) Ecrou auto-poinçonneur et support muni de cet écrou.

(57) La présente invention concerne un écrou autopoinçonneur.

Cet écrou (10) est réalisé à partir d'une feuille métallique et comprend une plaque (11) dont le pourtour définit une partie plane formant face d'appui (12) de l'écrou sur un support (P), et dont la portion (13) intérieure à ce pourtour est découpée et défoncée pour être en retrait par rapport à la face d'appui (12), laquelle portion (13) comporte en son centre un fût taraudé (14) formant poinçon prenant naissance dans la portion (13) et dirigé vers la face d'appui (12) de l'écrou.

L'écrou de l'invention est destiné à l'assemblage de tôles ou panneaux d'épaisseur quelconque et en un matériau quelconque.

FIG. 3

EP 0 133 087 A1

-1-

Ecrou auto-poinçonneur et support muni de cet écrou

La présente invention a essentiellement pour objet un écrou auto-poinçonneur monobloc pouvant assurer par lui-même le perçage d'un support, tel que par exemple un panneau ou une tôle, et être retenu sur ce support après l'opération de perçage.

On connaît déjà des écrous auto-poinçonneurs répondant à .la définition très générale ci-dessus. Ces écrous présentaient une forme classique, c'est-à-dire rectangulaire ou carrée, et comportaient sur deux côtés opposés une encoche conférant à l'une des deux faces de l'écrou des dimensions plus petites, cette face formant en quelque sortie tête de poinçonnage.

Ainsi, en exerçant une pression d'un côté sur l'écrou et de l'autre sur le support appliqué sur la face formant tête de poinçonnage, l'écrou pouvait percer le support et être retenu dans ce support, puisque les bords du trou pratiqué dans le support étaient en quelque sorte sertis dans l'encoche de l'écrou.

Toutefois, ces écrous antérieurs présentaient un certain nombre d'inconvénients. Le trou dans le support était évidemment carré ou rectangulaire et possédait des angles vifs, de sorte que lors du vissage ou du dévissage, il se produisait des déchirures altérant l'assemblage. Il en résulte que ce type d'écrou connu ne pouvait être utilisé qu'avec des supports ou tôles très rigides et possédant une certaine épaisseur. Au surplus, l'encoche pratiquée sur deux côtés opposés de l'écrou formait un épaulement de dimensions très petites, de sorte que la surface d'appui de l'écrou sur la tôle était aussi très petite, ce qui est un inconvénient lorsque l'on veut réaliser un assemblage rigide et solide. Enfin, après montage, une partie de l'écrou faisait saillie au-dessus du plan du support, ce qui pouvait rendre certains assemblages difficiles ou compliqués à réaliser.

L'invention a pour but notamment de remédier aux inconvénients ci-dessus en proposant un écrou auto-poinçonneur de structure nouvelle, offrant une très large surface d'appui sur le support, ne procurant aucune déchirure de ce support lors du vissage ou du dévissage, pouvant être utilisé pour des tôles ou supports de faible épaisseur et en des matériaux tendres (métalliques ou même matière plastique), et demeurant d'une fabrication très simple et peu coûteuse.

A cet effet, l'invention a pour objet un écrou auto-poinçonneur monobloc pouvant assurer par lui-même le perçage d'un support et être retenu sur ce support après l'opération de perçage, caractérisé en ce qu'il est réalisé à partir d'une feuille métallique et comprend une plaque dont le pourtour définit une partie sensiblement plane formant face d'appui de l'écrou sur le support et dont la portion interne à ce pourtour est découpée et défoncée pour être en retrait par rapport audit pourtour, et comporte en son centre un fût taraudé de préférence circulaire formant poinçon, prenant naissance dans ladite portion et dirigé vers ladite face d'appui de l'écrou.

Selon une autre caractéristique de l'invention, la portion précitée à l'intérieur du pourtour de la plaque est découpée suivant deux lignes sensiblement parallèles définissant deux bandes d'appui opposées, chaque bande comportant une face interne présentant une arête vive pour le cisaillement du support, et participant à l'accrochage du support sur l'écrou.

On ajoutera encore que la portion précitée s'étend depuis les deux côtés opposés du pourtour qui relient les deux bandes précitées, et présente une forme arquée à concavité tournée du côté de la face d'appui de l'écrou.

Suivant encore une autre caractéristique de l'invention, l'extrémité libre du fût taraudé est située dans un plan légèrement en dessous du plan contenant la face supérieure ou pourtour d'appui de l'écrou.

Suivant une réalisation préférée, le fût taraudé comporte un bourrelet annulaire.

Mais suivant un autre mode de réalisation, le fût taraudé peut comporter une partie conique sur au moins une partir de sa hauteur.

Ainsi, lors du perçage du support, celui-ci pourra s'expandre et venir s'accrocher sur la face interne des deux bandes d'appui de l'écrou.

On ajoutera encore ici que l'extrémité libre du fût taraudé peut être avantageusement biseautée de façon à faciliter le découpage et donc le perçage du support.

L'invention vise également un support quelconque, tel que par exemple un panneau ou une tôle, pourvu d'un écrou auto-poinçonneur répondant à l'une ou l'autre des caractéristiques susmentionnées.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue en coupe axiale d'un écrou auto-poinçonneur classique de forme carrée ou rectangulaire.

La figure 2 est également une vue en coupe axiale de cet écrou mais qui est montré en position retenue sur un support.

La figure 3 est une vue en perspective d'un écrou conforme à l'invention, vu de dessus.

La figure 4 est encore une vue en perspective de l'écrou de l'invention, mais vu de dessous.

Les figures 5, 6 et 7 illustrent en coupe respectivement trois étapes du montage de l'écrou sur un support.

La figure 8 est une vue en coupe, passant par l'axe de l'écrou, et montrant un assemblage de deux panneaux ou tôles à l'aide de cet écrou.

La figure 9 est une vue en coupe de l'écrou monté, suivant la ligne IX-IX de la figure 7.

La figure 10 est une vue en coupe de l'écrou, appliqué sur un support, et avant poinçonnage, suivant la ligne X-X de la figure 3, et

Les figures 11 et 12 illustrent en coupe axiale deux modes de réalisation du fût taraudé de l'écrou.

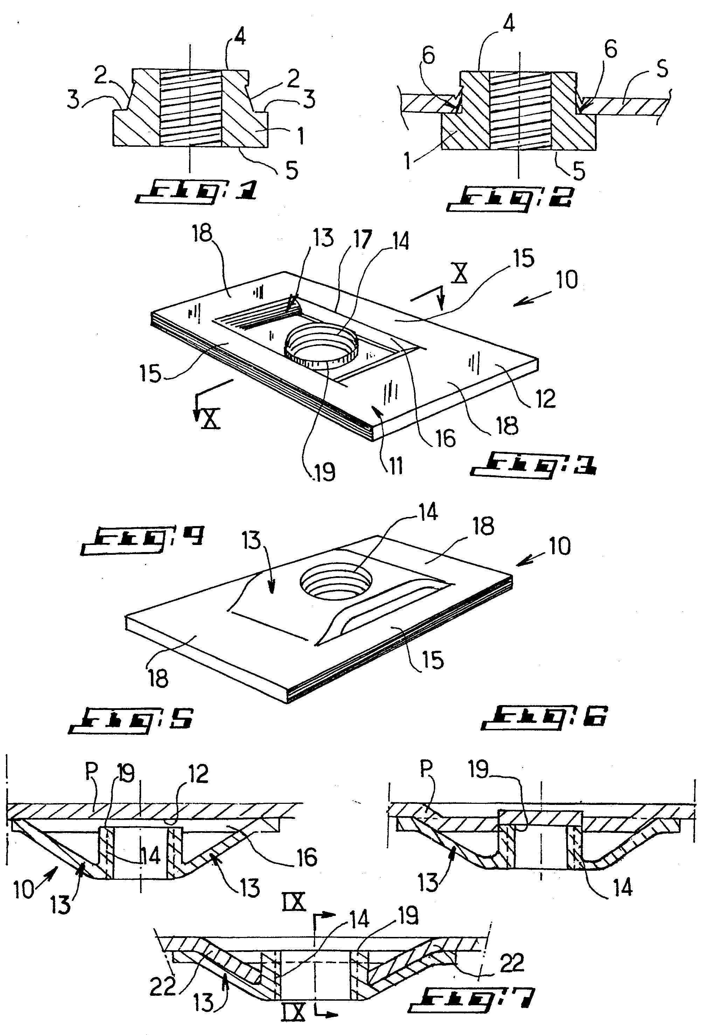

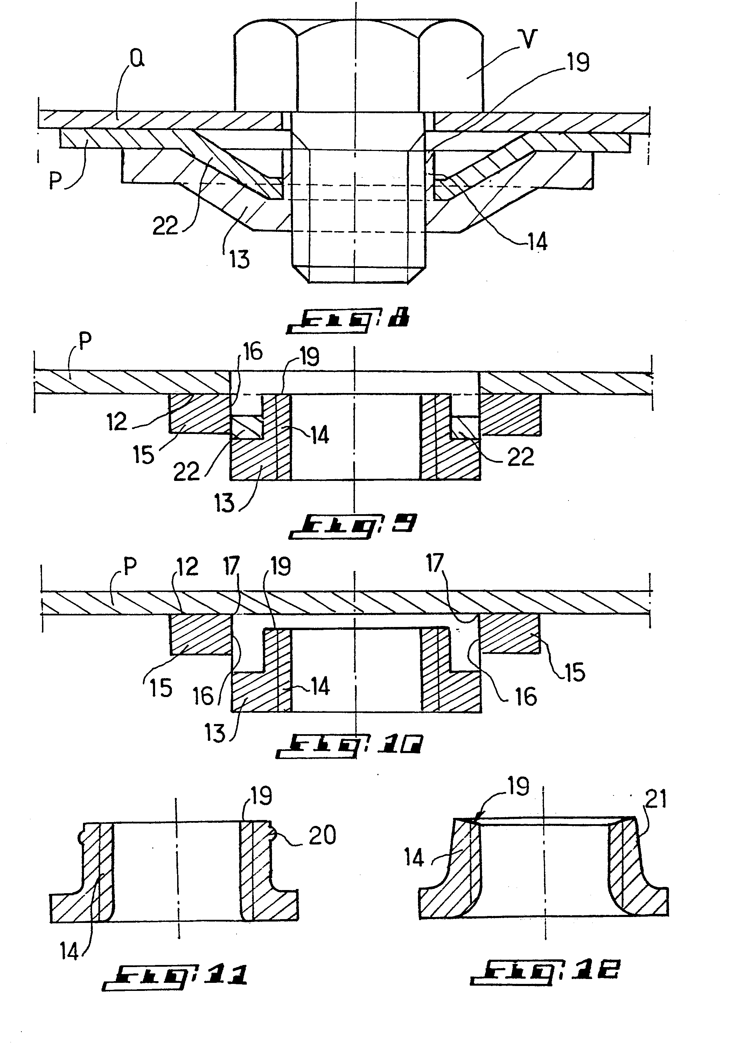

On se reportera aux figures 1 et 2 illustrant un écrou auto-poinçonneur classique 1, qui peut être rectangulaire ou carré. Cet écrou comporte sur deux côtés opposés une encoche 2 définissant un épaulement 3. Ainsi la face supérieure 4 de l'écrou 1 présente des dimensions plus petites que la face inférieure 5 et forme une tête de poinçonnage.

Dès lors, en exerçant une pression tant sur la face 5 que sur un support S, la tête de poinçonnage 4 perforera ledit support qui sera serti en 6 dans les encoches 2.

Comme expliqué précédemment, cet écrou 1, lors des opérations de vissage ou de dévissage, peut provoquer des déchirures au niveau du perçage carré ou rectangulaire dans le support S. De plus, comme on le voit bien sur la figure 2, la surface supérieure 4 fait nécessairement saillie du plan du support S, ce qui bien sûr procure des difficultés lorsqu'on veut réaliser par exemple l'assemblage de deux panneaux ou supports qui doivent être superposés.

La présente invention supprime ces inconvénients ainsi que beaucoup d'autres en proposant un écrou auto-poinçonneur 10 qui est réalisé à partir d'un flanc ou d'une feuille métallique, comme on le voit notamment sur les figures 3 et 4.

Cet écrou 10 se présente sous la forme d'une plaque 11 de forme quelconque, par exemple rectangulaire suivant la réalisation représentée, laquelle plaque 11 comporte un pourtour définissant une partie sensiblement rectangulaire et plane formant face d'appui 12 de l'écrou 10 sur un support P, tandis que la portion intérieure 13 à ce pourtour est découpée et défoncée, comme on le voit bien sur les figures 3 et 4, pour se trouver en retrait par rapport à la face d'appui 12. La portion intérieure 13 comporte en son centre un fût taraudé 14 formant poinçon prenant naissance dans la portion 13 et dirigé vers la face d'appui 12 de l'écrou 10, comme cela est bien visible sur la figure 3. Le fût 14 présente avantageusement une forme circulaire en section transversale, ce qui permet un poinçonnage rond et donc efficace, contrairement aux écrous de l'art antérieur.

La portion défoncée 13 de l'écrou 10 est découpée suivant deux lignes parallèles définissant deux bandes d'appui opposées 15. Comme on le voit sur les figures 3 et 10, chaque bande 15 comporte une face interne 16 présentant une arête vive 17 qui, comme on l'expliquera plus loin, permet le cisaillement du panneau ou support P lorsqu'on exerce une pression sur ce support. En outre, les faces internes 16 permettront avantageusement l'accrochage du support P après cisaillement.

Revenant en particulier à la figure 4, on voit que la portion défoncée ou emboutie 13 portant le fût taraudé 14 s'étend depuis les deux côtés opposés 18 du pourtour rectangulaire de l'écrou, qui relient les deux bandes 15. Cette portion 13 présente de préférence une forme arquée à concavité tournée du côté de la face d'appui ou pourtour 12 de l'écrou 10.

Comme on le voit bien sur la figure 10, l'extrémité libre 19 du fût taraudé 14 est située dans un plan légèrement au-dessous du plan contenant la face ou pourtour d'appui 12 de l'écrou 10. Suivant une réalisation préférée, l'extrémité 19 du fût taraudé 14 est située sensiblement à mi-hauteur de la face interne 16 des bandes parallèles et opposées 15.

Le fût taraudé 14, comme on le voit sur la figure 11, peut avantageusement comporter un bourrelet annulaire 20 de forme quelconque et permettant une meilleure retenue de l'écrou dans son support. En effet, lorsque l'opération de poinçonnage par le fût circulaire 14 aura été réalisée comme on l'expliquera ultérieurement, c'est-à-dire lorsque le bourrelet 20 aura franchi le support, il y aura emboutissage de celui-ci, donc allongement du support, ce qui provoquera un bon serrage de ce support contre ledit fût.

Le fût 14, comme on le voit sur la figure 12, peut présenter une forme extérieure tronconique, comme on le voit en 21, ce qui permettra, en fin de poinçonnage, de repousser le support contre les faces internes 16 des bandes d'appui 15, de sorte qu'il y aura encastrement ou accrochage de l'écrou sur le support.

Sur la figure 12, on voit également que l'extrémité libre 19 du fût 14 est biseautée de façon à faciliter le découpage et le perçage du support lors de l'opération de poinçonnage. On ajoutera ici que l'extrémité 19 pourra présenter un angle de coupe quelconque et approprié en fonction par exemple du matériau du support P.

On décrira maintenant le montage et le fonctionnement de l'écrou auto-poinçonneur selon l'invention en s'aidant plus particulièrement des figures 5 à 10.

Comme cela résulte de la description qui précède, l'écrou 10 de l'invention ne nécessite pas un perçage préalable du support P sur lequel il doit être fixé.

Comme on le voit sur les figures 5 et 10, l'écrou est tout d'abord appliqué sur le support ou tôle P par sa face d'appui 12. Un poinçon, non représenté, présentant une forme adaptée, c'est-à-dire une dimension très légèrement inférieure à la distance entre les deux faces internes 16, est appliqué fortement sur le panneau P, tandis qu'un contre-poinçon, de forme également adaptée, soutient l'écrou 10 par en dessous.

La pression exercée par le poinçon sur le support P provoque le cisaillage de celui-ci le long des deux arêtes vives 17 formées par l'intersection des faces internes 16 et de la face supérieure des bandes d'appui 15. Autrement dit, on comprend que les deux bandes 15 jouent ici le rôle d'une matrice.

La pression continuant de s'exercer sur le support P, comme on le voit sur la figure 6, et le cisaillage le long des arêtes vives 17 étant achevé ou non, ledit support rencontre l'extrémité 19 du fût 14 qui joue le rôle d'un poinçon perforant de façon générale circulaire ledit support P.

La pression continuant de s'exercer sur le support P, la partie 22 de ce support, comme on le voit sur la figure 9, viendra s'encastrer sans jeu entre la paroi externe du fût 14 et tout ou partie des faces internes 16 de l'écrou.

A ce stade, et comme on le voit sur les figures 7, 8 et 9, la partie 22 du panneau P épouse sensiblement la face supérieure de la portion défoncée 13 de l'écrou 10.

On insistera ici sur le fait que le fût 14 présentant avantageusement une forme extérieure tronconique, comme représenté sur la figure 12, permettra, au fur et à mesure du poinçonnage par ledit fût, de repousser la partie 22 du panneau P qui viendra ainsi s'encastrer ou s'accrocher fermement sur les faces internes précitées 16. D'un autre côté, si le fût 14 comporte un bourrelet 20, comme montré sur la figure 11, (ce bourrelet pouvant être continu sur la périphérie du fût ou bien être constitué par plusieurs parties saillantes), lorsque
le panneau P, sous l'effet de la pression exercée sur
lui, aura franchi ce bourrelet, il y aura emboutissage
du support P et donc allongement, dans le sens longitudinal de l'écrou, de la partie 22 et striction de
celle-ci en son point le plus faible, c'est-à-dire au
droit du trou dans le support. Ceci procurera un resserrage de la partie 22 contre le fût 14.

L'écrou 10 étant maintenu fermement fixé sur le support P, on peut alors fixer un panneau, une tôle ou
analogue Q sur le support P à l'aide d'une vis V par
exemple, comme on le voit bien sur la figure 8, de
façon à réaliser un assemblage tout à fait satisfaisant.

A cet égard, on insistera sur le fait que l'écrou de
l'invention présente l'avantage de ne pas faire saillie
de la tôle-support, puisque l'extrémité 19 du fût 14
demeure toujours en retrait par rapport à la face
d'appui 12, ce qui permet un bon plaquage des supports
P et Q à assembler au moyen de l'écrou.

Par ailleurs, le décalage entre l'extrémité 19 du
fût 14 et la face ou le pourtour d'appui 12 est nécessaire, car, lors de l'opération de poinçonnage, le
cisaillage préalable du support P permet de bloquer
ou de coincer le panneau P avant le début de l'opération de perçage du trou dans ce panneau et d'éviter
que ledit trou soit égueulé ce qui compromettrait
l'opération d'encastrement du panneau dans l'écrou. En
outre, on remarquera que l'écrou sera définitivement
immobilisé en rotation une fois fixé sur le support,
ce qui lui évite de tourner lors d'une opération de
vissage ou de dévissage.

On a donc réalisé suivant l'invention un écrou auto-
poinçonneur obtenu à partir d'une feuille métallique, peu coûteux à fabriquer, pouvant être utilisé avec des panneaux d'épaisseur quelconque et même très petite, ces panneaux pouvant être en un matériau quelconque tendre ou dur, et même en un matériau synthétique.

L'invention n'est nullement limitée au mode de réalisation décrit et illustré qui n'a été donné qu'à titre d'exemple, et elle comprend tous les équivalents techniques des moyens décrits ainsi que leurs combinaisons si celles-ci sont effectuées suivant son esprit.

Revendications

1. Ecrou auto-poinçonneur monobloc pouvant assurer par lui-même le perçage d'un support et être retenu sur ce support après l'opération de perçage, caractérisé en ce qu'il est réalisé à partir d'une feuille métallique et comprend une plaque (11) dont le pourtour définit une partie sensiblement plane formant face d'appui (12) de l'écrou (10) sur le support (P), et dont la portion (13) intérieure à ce pourtour est découpée et défoncée pour être en retrait par rapport audit pourtour et comporte en son centre un fût taraudé (14) de préférence circulaire formant poinçon, prenant naissance dans ladite portion (13) et dirigé vers ladite face d'appui (12) de l'écrou (10).

2. Ecrou selon la revendication 1, caractérisé en ce que la portion précitée est découpée suivant deux lignes sensiblement parallèles définissant deux bandes d'appui opposées (15), chaque bande comportant une face interne (16) présentant une arête vive (17) pour le cisaillement du support, et participant à l'accrochage du support sur l'écrou.

3. Ecrou selon la revendication 1 ou 2, caractérisé en ce que la portion précitée (13) portant le fût taraudé (14) s'étend depuis les deux côtés opposés (18) du pourtour qui relient les deux bandes précitées (15), et présente une forme arquée à concavité tournée du côté de la face d'appui (12) de l'écrou (10).

4. Ecrou selon l'une des revendications 1 à 3, caractérisé en ce que l'extrémité libre (19) du fût taraudé (14) est située dans un plan légèrement en dessous du plan contenant la face ou pourtour d'appui (12) de l'écrou (10).

5. Ecrou selon l'une des revendications 1 à 3, caractérisé en ce que le fût taraudé (14) comporte au moins un bourrelet (20).

6. Ecrou selon l'une des revendications précédentes, caractérisé en ce que le fût taraudé (14) comporte une partie conique (21) sur au moins une partie de sa hauteur.

7. Ecrou selon l'une des revendications précédentes, caractérisé en ce que l'extrémité libre (19) du fût taraudé (14) est biseautée pour faciliter le perçage du support (P).

8. Support, tel que par exemple panneau ou tôle, pourvu d'un écrou auto-poinçonneur selon l'une des revendications précédentes.

0133087

1/2

Fig.1

Fig.2

Fig.3

Fig.4

Fig.5

Fig.6

Fig.7

Fig. 8

Fig. 9

Fig. 10

Fig. 11

Fig. 12

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int. Cl. 3) |
|---|---|---|---|
| A | FR-A-2 217 581 (MULTIFASTENER CORP.) * Page 3, lignes 30-39; page 4, lignes 1-3, 17-22; figure 1 * | 1,6,8 | F 16 B 37/06 |
| | --- | | |
| A | FR-A-2 386 719 (ETS. DEJOND S.A.) * Page 2, lignes 11-15; figure * | 5 | |
| | ----- | | |

DOMAINES TECHNIQUES RECHERCHES (Int. Cl. 3)

F 16 B

Le présent rapport de recherche a été établi pour toutes les revendications

| Lieu de la recherche | Date d'achèvement de la recherche | Examinateur |
|---|---|---|
| LA HAYE | 01-10-1984 | VAN WESTENBRUGGE A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82